# EUROPÄISCHE PATENTANMELDUNG

(11) **EP 3 960 572 A1**
(43) Veröffentlichungstag der Anmeldung: **02.03.2022**
(21) Anmeldenummer: 21185115.9
(22) Anmeldetag: 12.07.2021
(51) Int. Cl.: B60W 50/14, B60W 30/095, G08G 1/16, G01C 19/56

(54) **ABBIEGEASSISTENZSYSTEM**

(30) Priorität: 21.07.2020 DE 102020119253
(71) Anmelder: Wüllhorst GmbH & Co. Kommanditgesellschaft, 59379 Selm (DE)
(72) Erfinder: Wüllhorst, Johannes, 59394 Nordkirchen (DE)
(74) Vertreter: Weeg, Thomas

(57) **Zusammenfassung**

Die Erfindung betrifft ein Abbiegeassistenzsystem für ein Nutzfahrzeug (2) umfassend eine Erfassungseinrichtung (4) zur Erkennung der Anwesenheit einer Person an einer Fahrzeugseite (6) des Nutzfahrzeugs (2) sowie eine Steuereinheit (8) mit Mitteln zur Erkennung eines Abbiegevorgangs des Nutzfahrzeugs (2), die zumindest eine momentane Fahrgeschwindigkeit des Nutzfahrzeugs (2) verarbeiten. Das Abbiegeassistenzsystem ist derart eingerichtet, dass ein Warnsignal ausgegeben wird, wenn eine Person bei einem Abbiegevorgang gefährdet werden würde. Es wird vorgeschlagen, dass die Mittel zur Erkennung eines Abbiegevorgangs zumindest einen Gyrosensor (14) zur Erfassung einer Fahrtrichtungsänderung des Nutzfahrzeugs (2) aufweisen.

## Beschreibung

Die vorliegende Erfindung betrifft ein Abbiegeassistenzsystem für ein Nutzfahrzeug umfassend eine Erfassungseinrichtung zur Erkennung der Anwesenheit einer Person an einer Fahrzeugseite des Nutzfahrzeugs sowie eine Steuereinheit mit Mitteln zur Erkennung eines Abbiegevorgangs des Nutzfahrzeugs, die zumindest eine momentane Fahrgeschwindigkeit des Nutzfahrzeugs verarbeiten, wobei das Abbiegeassistenzsystem derart eingerichtet ist, dass ein Warnsignal ausgegeben wird, wenn eine Person bei einem Abbiegevorgang gefährdet werden würde. Die vorliegende Erfindung betrifft ferner ein Gerät für ein solches Abbiegeassistenzsystem, ein Fahrzeug mit einem entsprechenden Abbiegeassistenzsystem sowie ein entsprechendes Verfahren.

Im Straßenverkehr kommt es beim Abbiegen von Nutzfahrzeugen an Kreuzungen immer wieder zu tödlichen Unfällen mit schwächeren Verkehrsteilnehmern, wie Radfahrern oder Fußgängern, weil sich diese zum Abbiegezeitpunkt des Nutzfahrzeugs an der Seite des Nutzfahrzeugs in einem Bereich befinden, der auch unter Anwendung höchster Sorgfalt durch den Fahrzeugführer für diesen nur durch eine Spiegelbeobachtung nicht ausreichend klar einsehbar ist. Als besonders unübersichtlich gelten dabei Rechtsabbiegemanöver bei vorherrschendem Rechtsverkehr sowie Linksabbiegemanöver bei vorherrschendem Linksverkehr.

Um derartige Unfälle zu vermeiden, werden Nutzfahrzeuge - wie beispielsweise Sattelschlepper, Busse, Muldenkipper, LKW mit festen Kofferaufbauten und Anhängern und dergleichen - mit Abbiegeassistenzsystemen ausgerüstet, die eine zuverlässigere Erkennung der Anwesenheit einer Person an der Fahrzeugseite ermöglichen. Dabei soll der Fahrzeugführer vom System z.B. durch ein akustisches, optisches oder taktiles Signal gewarnt werden, wenn sich ein schwächerer Verkehrsteilnehmer an der Fahrzeugseite befindet und dieser bei einem beginnenden Abbiegevorgang gefährdet würde. Zur besseren Einsehbarkeit des Totwinkels können diese Systeme beispielsweise auch durch ein Kamera-/Monitorsystem erweitert werden, wie dies z.B. in der DE 10 2012 014 448 A1 gezeigt ist.

Damit der Fahrzeugführer bei der übrigen Fahrt, d.h. außerhalb von Gefahrensituationen, nicht gestört wird, ist es erwünscht, dass das Abbiegeassistenzsystem nur unter bestimmten Gegebenheiten aktiv ist. Dabei wird beispielsweise gemäß einer Vorgabe der Europäischen Union empfohlen, dass Abbiegeassistenzsysteme bei erkannter Person im Totwinkel eine Warnung zumindest dann ausgeben müssen, wenn eine Kurvenfahrt des Nutzfahrzeugs mit einem Kurvenradius von ≤ 10 m vorliegt oder ein Fahrtrichtungsanzeiger eingeschaltet ist.

Zur Erkennung von Kurvenfahrten sind aus dem Stand der Technik unterschiedliche technische Lösungen bekannt. Bei Abbiegeassistenzsystemen, die vom Hersteller ab Werk eingebaut werden, wird in der Regel direkt auf Signale der Steuerelektronik des Fahrzeugs zugegriffen. Dabei kann beispielsweise aus dem Tacho-Signal und einem Signal über den Lenkradeinschlag auf eine Kurvenfahrt und einen entsprechenden Kurvenradius geschlossen werden. Insbesondere bei Nachrüstlösungen, die auch von Drittanbietern angeboten werden, ist ein Zugriff auf sämtliche Signale der Steuerelektronik nicht immer möglich. Zudem ist beim Nachrüsten für gewöhnlich eine auf das individuelle Fahrzeug abgestimmte Kalibrierung der Kurvenfahrterkennung notwendig, da unterschiedliche Hersteller - ggf. sogar je nach Fahrzeugtyp - unterschiedliche Signalformen verwenden.

Als Alternative hierzu haben sich insbesondere auf dem Nachrüstmarkt Lösungen durchgesetzt, bei dem eine Fahrtrichtungsänderung durch einen im Bereich des Lenkgestänges des Nutzfahrzeugs verbauten Lenkwinkelsensor erkannt wird. Eine Kurvenfahrt und der entsprechende Kurvenradius kann so anhand des durch den Lenkwinkelsensor erfassten Ausschlags des Lenkgestänges und der ermittelten Fahrgeschwindigkeit, beispielsweise durch Auslesen des Tacho-Signals aus der Steuerelektronik, ermittelt werden. Jedoch ist auch die Installation eines derartigen Lenkwinkelsensors mit einem hohen Aufwand verbunden, da dieser je nach Hersteller und Fahrzeugtyp in einer bestimmten Position im Bereich des Lenkgestänges befestigt und anschließend kalibriert werden muss.

Es ist daher Aufgabe der vorliegenden Erfindung ein verbessertes Abbiegeassistenzsystem bereitzustellen, das die eingangs genannten Nachteile vermeidet und sich vorzugsweise besonders gut zur Nachrüstung von bestehenden Fahrzeugflotten eignet. Es ist ferner Aufgabe der vorliegenden Erfindung ein Gerät für ein derartiges Abbiegeassistenzsystem, ein Fahrzeug mit einem derartigen Abbiegeassistenzsystem sowie ein entsprechendes Verfahren bereitzustellen.

Die Aufgabe wird für ein gattungsgemäßes Abbiegeassistenzsystem gelöst, indem die Mittel zur Erkennung eines Abbiegevorgangs zumindest einen Gyrosensor zur Erfassung einer Fahrtrichtungsänderung des Nutzfahrzeugs aufweisen. Durch den mit dem Nutzfahrzeug lage- und ortsfest verbundenen Gyrosensor wird eine Fahrtrichtungsänderung unmittelbar als Lageänderung des Nutzfahrzeugs im Raum erfasst und kann zusammen mit der erfassten momentanen Fahrgeschwindigkeit zur Erkennung einer Kurvenfahrt bzw. zur Berechnung des entsprechenden Kurvenradius verwendet werden.

Der Gyrosensor kann mit wenig Aufwand in jedem Typ von Nutzfahrzeug an einer beliebigen Stelle befestigt werden. Da der Gyrosensor im Gegensatz zu den bisher verwendeten Mitteln zur Erkennung eines Abbiegevorgangs nicht auf eine hersteller- oder typenspezifischen Lenkgestängekonstruktion oder Steuerelektronik angepasst werden muss, eignet sich das erfindungsgemäße Abbiegeassistenzsystem besonders gut als Nachrüstlösung.

Vorzugsweise wird der Gyrosensor in und/oder an einer Fahrerkabine des Nutzfahrzeugs befestigt. Auf diese Weise wird eine Fahrtrichtungsänderung des Nutzfahrzeugs besonders schnell und sicher erkannt.

Die Erfassungseinrichtung zur Erkennung der Anwesenheit einer Person an der Fahrzeugseite des Nutzfahrzeugs kann beispielsweise eine Radarsensoreinheit und/oder eine Kameraeinheit umfassen, die auf einen Gefahrenbereich bzw. einen Abdeckbereich neben der Fahrzeugseite gerichtet sind bzw. diesen auf eine Anwesenheit einer Person bzw. eines schwächeren Verkehrsteilnehmers überwachen.

Unter "Fahrgeschwindigkeit" wird im Sinne der vorliegenden Erfindung der richtungsunabhängige Betrag der Geschwindigkeit des Nutzfahrzeugs verstanden. Vorzugsweise wird die momentane Fahrgeschwindigkeit über das Tacho-Signal aus der Zentralelektrik des Nutzfahrzeugs erfasst.

Vorzugsweise gibt das Abbiegeassistenzsystem ein Warnsignal zumindest dann aus, wenn die Person sich im von der Erfassungseinrichtung überwachten Gefahrenbereich bzw. Abdeckbereich an der Fahrzeugseite befindet und sich basierend auf der momentanen Fahrgeschwindigkeit und einer Fahrtrichtungsänderung des Nutzfahrzeugs eine Kurvenfahrt des Nutzfahrzeugs mit einem Kurvenradius kleiner gleich einem voreingestellten Grenzkurvenradius von ≤ 30 m, bevorzugt ≤ 20 m, besonders bevorzugt ≤ 10 m, ergibt.

Der Gyrosensor weist zumindest eine ausgezeichnete Richtungsachse auf, die durch die konstruktive Ausgestaltung des Gyrosensors selbst vorgegeben ist. In der Regel weist der Gyrosensor zumindest drei zueinander orthogonale ausgezeichnete Richtungsachsen auf.

Nach einer Ausgestaltung der Erfindung ist zur optimalen Erfassung einer Fahrtrichtungsänderung zumindest eine der ausgezeichneten Richtungsachsen des Gyrosensors parallel zu einer Achse des Fahrzeugkoordinatensystems des Nutzfahrzeugs ausgerichtet. Das Fahrzeugkoordinatensystem ist dabei üblicherweise definiert als rechtshändiges Koordinatensystem, bei dem die x-Achse in Vorwärtsfahrtrichtung nach vorn und die z-Achse nach oben zeigt. Vorzugsweise sind zumindest zwei der ausgezeichneten Richtungsachsen des Gyrosensors jeweils parallel zu einer Achse des Fahrzeugkoordinatensystems ausgerichtet.

Damit bei einer Montage des Gyrosensors am Nutzfahrzeug ersichtlich ist, in welcher Richtung sich die zumindest eine ausgezeichnete Richtungsachse befindet, ist nach einer bevorzugten Ausgestaltung der Erfindung dem Gyrosensor zumindest eine optisch wahrnehmbare Markierung zugeordnet, die auf einer den Gyrosensor aufnehmenden Platine und/oder auf einem den Gyrosensor aufnehmenden Gehäuse angebracht ist und die Richtung zumindest einer der ausgezeichneten Richtungsachsen des Gyrosensors anzeigt. Auf diese Weise kann die Richtung der ausgezeichneten Richtungsachse etwa bei der Montage besonders leicht erkannt und präzise ausgerichtet werden. Als Markierungen eignen sich beispielsweise Richtungspfeile. Es ist ersichtlich, dass auch andere Markierungen denkbar sind, z.B. in Form von zwei Punkten, wobei eine die Punkte verbindende, gedachte Gerade die Richtung der ausgezeichneten Richtungsachse anzeigt.

Alternativ oder zusätzlich kann der Gyrosensor auch derart in Relation zu der ihn aufnehmenden Platine oder zu dem ihn aufnehmenden Gehäuse angeordnet sein, dass zumindest eine Kante der Platine oder eine Kante des Gehäuses parallel zu einer ausgezeichneten Richtungsachse des Gyrosensors verläuft. Auf diese Weise muss lediglich die Platine oder das Gehäuse mit seiner zumindest einen Kante entlang einer Achse des Fahrzeugkoordinatensystems ausgerichtet werden, um den Gyrosensor auszurichten.

Nach einer bevorzugten Ausgestaltung der Erfindung werden zumindest zwei, bevorzugt alle drei ausgezeichneten Richtungsachsen des Gyrosensors auf der Platine und/oder dem Gehäuse durch Markierungen angezeigt. Auf diese Weise kann eine Einbaulage der Platine oder des Gehäuse noch flexibler an den gegebenen Bauraum im Nutzfahrzeug angepasst werden.

Nach einer weiteren bevorzugten Ausgestaltung der Erfindung wird zur verbesserten Erfassung einer Fahrtrichtungsänderung eine der zumindest einen ausgezeichneten Richtungsachsen des Gyrosensors parallel zur in Vorwärtsfahrtrichtung nach vorn zeigenden x-Achse des Fahrzeugkoordinatensystems ausgerichtet. Bevorzugt ist bei Vorliegen mehrerer (ggf. durch entsprechende Markierungen angezeigter) ausgezeichneter Richtungsachsen eine dieser Achsen, insbesondere über die Steuereinheit, als Haupt-Richtungsachse auswählbar. Die Haupt-Richtungsachse kann daraufhin parallel zur x-Achse des Fahrzeugkoordinatensystems ausgerichtet werden. Auf diese Weise kann eine Einbaulage des Gyrosensors und ggf. der Platine oder des Gehäuses, auf/in dem dieser angeordnet ist, flexibel gewählt und so besonders gut an den zu Verfügung stehenden Bauraum abgestimmt werden. Bevorzugt weist die Steuereinheit eine Schalteranordnung mit zumindest einem Schalter auf, über die eine der ausgezeichneten Richtungsachsen als Haupt-Richtungsachse ausgewählt werden kann. Besonders bevorzugt ist der zumindest eine Schalter als DIP-Schalter ausgebildet, so dass eine Auswahl der Haupt-Richtungsachse in einfacher Weise manuell erfolgen kann und die getroffene Auswahl optisch nachvollziehbar ist.

Gemäß einer weiteren bevorzugten Ausgestaltung der Erfindung sind der Gyrosensor und die Steuereinheit in einem gemeinsamen Gehäuse, insbesondere auf einer gemeinsamen Platine, angeordnet. Durch die Integration des zur Erfassung einer Fahrtrichtungsänderung verwendeten Sensors in die Steuereinheit wird ein gegenüber den bisherigen technischen Lösungen erheblich vereinfachtes System geschaffen, bei dem der Herstellungs-, Montage- und Wartungsaufwand erkennbar verringert wird. Insbesondere wird auf eine Sensorik zur Erfassung der Fahrtrichtungsänderung im Bereich des Lenkgeständes sowie auf das Verlegen entsprechender Verbindungsleitungen verzichtet.

Vorzugsweise ist der Gyrosensor in Form eines Vibrationskreisels ausgebildet. Derartige Bauteile sind besonders gut miniaturisierbar, wodurch der insbesondere bei gemeinsam mit der übrigen Steuereinheit in einem gemeinsamen Gehäuse, insbesondere auf einer gemeinsamen Platine, angeordnete Gyrosensor einen hohen Integrationsgrad und eine noch kompaktere Bauweise ermöglicht.

Gemäß dem bereits Vor- sowie dem weiter unten Nachbeschriebenen wird die eingangs gestellte Aufgabe auch durch ein Gerät nach Anspruch 6 gelöst. Das Gerät ist derart ausgebildet und eigerichtet, als Steuereinheit für ein Abbiegeassistenzsystem für ein Nutzfahrzeug zu funktionieren, insbesondere als Steuereinheit für ein Abbiegeassistenzsystem nach einem der Ansprüche 1 bis 5, wobei das Abbiegeassistenzsystem eine Erfassungseinrichtung zur Erkennung der Anwesenheit einer Person an einer Fahrzeugseite des Nutzfahrzeugs aufweist und derart eingerichtet ist, dass ein Warnsignal ausgegeben wird, wenn die Person bei einem Abbiegevorgang gefährdet werden würde, wobei das Gerät Mittel zur Erkennung eines Abbiegevorgangs des Nutzfahrzeugs aufweist, die zumindest eine momentane Fahrtgeschwindigkeit des Nutzfahrzeugs verarbeiten. Das Gerät zeichnet sich dadurch aus, dass es einen Gyrosensor zur Erfassung einer Fahrtrichtungsänderung des Nutzfahrzeugs aufweist, der mit dem übrigen Gerät in einem gemeinsamen Gehäuse, insbesondere auf einer Platine des Geräts, angeordnet ist. Durch die Integration des zur Erfassung einer Fahrtrichtungsänderung verwendeten Sensors in die Steuereinheit wird eine gegenüber den bisherigen technischen Lösungen signifikant vereinfachte Lösung bereitgestellt, bei der Herstellungs-, Montage- und Wartungsaufwand erkennbar verringert werden. Durch Einbau der Steuereinheit im oder am Nutzfahrzeug, bevorzugt in oder an der Fahrerkabine, wird eine Fahrtrichtungsänderung durch den Gyrosensor unmittelbar als Lageänderung des Nutzfahrzeugs im Raum erfasst und kann zusammen mit der erfassten momentanen Fahrgeschwindigkeit zur Erkennung einer Kurvenfahrt bzw. zur Berechnung des entsprechenden Kurvenradius verwendet werden.

Nach einer bevorzugten Ausgestaltung der Erfindung weist das Gehäuse des Geräts oder die Platine des Geräts zumindest eine optisch wahrnehmbare Markierung auf, die die Richtung zumindest einer ausgezeichneten Richtungsachse des Gyrosensors anzeigt. Als Markierungen eignen sich beispielsweise Richtungspfeile. Es ist ersichtlich, dass auch andere Markierungen denkbar sind, z.B. in Form von zwei Punkten, wobei eine die Punkte verbindende, gedachte Gerade die Richtung der ausgezeichneten Richtungsachse anzeigt.

Nach einer weiteren bevorzugten Ausgestaltung der Erfindung weist der Gyrosensor zumindest zwei ausgezeichnete Richtungsachsen auf, wobei das Gerät eine Schalteranordnung mit zumindest einem Schalter, insbesondere einem DIP-Schalter, aufweist, über die eine der ausgezeichneten Richtungsachsen des Gyrosensors als Haupt-Richtungsachse ausgewählt werden kann. Auf diese Weise kann eine Einbaulage des Gyrosensors und ggf. der Platine oder des Gehäuses, auf/in dem dieser angeordnet ist, flexibel gewählt und so besonders gut an den zu Verfügung stehenden Bauraum abgestimmt werden. Die Haupt-Richtungsachse kann daraufhin parallel zu einer Achse des Fahrzeugkoordinatensystems, bevorzugt parallel zur x-Achse, ausgerichtet werden.

Gemäß dem bereits Vor- sowie dem weiter unten Nachbeschriebenen wird die eingangs gestellte Aufgabe auch durch ein Nutzfahrzeug nach Anspruch 9 gelöst. Ein derartiges Nutzfahrzeug weist ein Abbiegeassistenzsystem nach einem der Ansprüche 1 bis 5 auf. Ein derartiges Nutzfahrzeug kann besonders sicher gefahren werden. Zudem fallen die Haltungskosten für ein solches Fahrzeug aufgrund des geringeren Wartungsaufwands für das Abbiegeassistenzsystem geringer aus. Bevorzugt ist zur besseren Erkennung einer Fahrtrichtungsänderung zumindest eine ausgezeichnete Richtungsachse des Gyrosensors, ggf. die ausgewählte Haupt-Richtungsachse, parallel zu einer Achse des Fahrzeugkoordinatensystems, bevorzugt parallel zur x-Achse, ausgerichtet.

Gemäß dem bereits Vor- sowie dem weiter unten Nachbeschriebenen wird die eingangs gestellte Aufgabe auch durch ein Verfahren zur Erkennung und Signalisierung der Anwesenheit einer Person an einer Fahrzeugseite des Nutzfahrzeugs, die bei einem Abbiegevorgang gefährdet werden würde, nach Anspruch 9 gelöst. Das erfindungsgemäße Verfahren umfasst folgende Schritte:
- Überwachung eines Abdeckungsbereichs neben der Fahrzeugseite des Nutzfahrzeugs mittels einer Erfassungseinrichtung zur Erkennung der Anwesenheit einer Person,
- Überwachung einer momentanen Fahrgeschwindigkeit des Nutzfahrzeugs,
- Überwachung einer Fahrtrichtungsänderung des Nutzfahrzeugs,
- Signalisierung einer Anwesenheit einer Person an der Fahrzeugseite des Nutzfahrzeugs, wenn sich zumindest eine Person im Abdeckungsbereich befindet und basierend auf der momentanen Fahrgeschwindigkeit und einer Fahrtrichtungsänderung des Nutzfahrzeugs eine berechnete Kurvenfahrt des Nutzfahrzeugs mit einem Kurvenradius kleiner gleich einem, insbesondere voreingestellten, Grenzkurvenradius vorliegt.

Das erfindungsgemäße Verfahren zeichnet sich dadurch aus, dass die Fahrtrichtungsänderung des Nutzfahrzeugs mittels eines mit dem Nutzfahrzeug, insbesondere mit dessen Fahrerkabine, orts- und lagefest verbundenen Gyrosensors überwacht wird. Auf diese Weise wird eine Fahrtrichtungsänderung unmittelbar als Lageänderung des Nutzfahrzeugs im Raum erfasst und kann zusammen mit der erfassten momentanen Fahrgeschwindigkeit zur Erkennung einer Kurvenfahrt bzw. zur Berechnung des entsprechenden Kurvenradius verwendet werden. Durch die Verwendung eines lediglich von der Einbaulage im Nutzfahrzeug, nicht jedoch vom Fahrzeughersteller oder -typ abhängigen Gyrosensorsignals wird ein funktionstaugliches und kosteneffizient implementierbares Assistenzverfahren für sämtliche Nutzfahrzeuge bereitgestellt, das sich besonders gut zur Nachrüstung bestehender Flotten eignet.

Es wird ausdrücklich darauf hingewiesen, dass die vorstehend erläuterten Ausgestaltungen der Erfindung jeweils für sich oder in einer beliebigen technisch sinnvollen Kombination auch untereinander jeweils mit dem Gegenstand der unabhängigen Ansprüche kombinierbar sind.

Abwandlungen und Ausgestaltungen der Erfindung sowie weitere Vorteile und Einzelheiten der Erfindung lassen sich der nachfolgenden gegenständlichen Beschreibung und den Zeichnungen entnehmen. In den schematischen Figuren zeigen:
- Fig. 1: Ein erfindungsgemäßes Nutzfahrzeug,
- Fig. 2: eine Steuereinheit eines erfindungsgemäßen Abbiegeassistenzsystems,
- Fig. 3: einen Verfahrensablauf gemäß einer Ausführungsform der Erfindung.

Gleich oder ähnlich wirkende Teile sind - sofern dienlich - mit identischen Bezugsziffern versehen.

Einzelne technische Merkmale der nachbeschriebenen Ausführungsbeispiele können auch in Kombination mit vorbeschriebenen Ausführungsbeispielen sowie den Merkmalen der unabhängigen Ansprüche und etwaiger weiterer Ansprüche zu erfindungsgemäßen Gegenständen kombiniert werden.

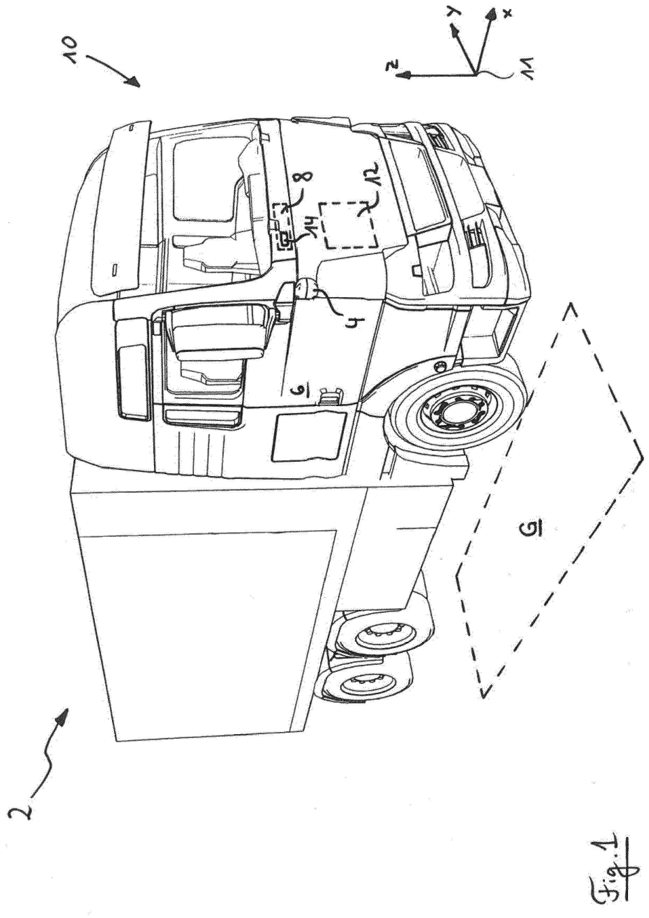

Fig. 1 zeigt ein erfindungsgemäßes Nutzfahrzeug 2, das mit einem Abbiegeassistenzsystem ausgerüstet ist. Das Abbiegeassistenzsystem weist eine Erfassungseinrichtung 4 zur Erkennung der Anwesenheit einer Person an einer Fahrzeugseite 6 des Nutzfahrzeugs auf. Die Erfassungseinrichtung 4 überwacht einen neben der Fahrzeugseite 6 liegenden Gefahrenbereich G und kann zu diesem Zweck beispielsweise eine Radarsensoreinheit und/oder eine Kameraeinheit aufweisen. Das Nutzfahrzeug ist für den Rechtsverkehr ausgelegt, so dass auch die Erfassungseinrichtung 4 einen Bereich auf der rechten Fahrzeugseite 6 überwacht. Bei vorherrschendem Linksverkehr wäre die Erfassungseinrichtung entsprechend auf die linke Seite zu verlagern.

Teil des Abbiegeassistenzsystems, mit dem das Nutzfahrzeug 2 ausgestattet ist, ist eine Steuereinheit 8, die bei der vorliegenden Ausführungsform in der Fahrerkabine 10 oberhalb einer Zentralelektrik 12 des Nutzfahrzeugs 2 eingebaut ist. Die Steuereinheit 8 weist Mittel zur Erkennung eines Abbiegevorgangs auf. Hierbei wertet die Steuereinheit zur Bestimmung der momentanen Fahrgeschwindigkeit ein Tacho-Signal aus der Zentralelektrik 12 aus. Überdies wertet die Steuereinheit 8 zur Bestimmung einer Fahrtrichtungsänderung die Signale eines Gyrosensors 14 aus, der in der hier gezeigten Ausführungsform integraler Bestandteil der Steuereinheit 8 ist. Auf Basis dieser Signale kann eine Kurvenfahrt des Nutzfahrzeugs 2 und der entsprechende Kurvenradius ermittelt werden. Das Abbiegeassistenzsystem ist so eingerichtet, dass ein Warnsignal zumindest dann ausgegeben wird, wenn eine Person sich im Gefahrenbereich G befindet und sich basierend auf der momentanen Fahrgeschwindigkeit und einer Fahrtrichtungsänderung des Nutzfahrzeugs 2 eine Kurvenfahrt des Nutzfahrzeugs mit einem Kurvenradius kleiner gleich einem Grenzkurvenradius, beispielsweise von ≤ 10 m, ergibt.

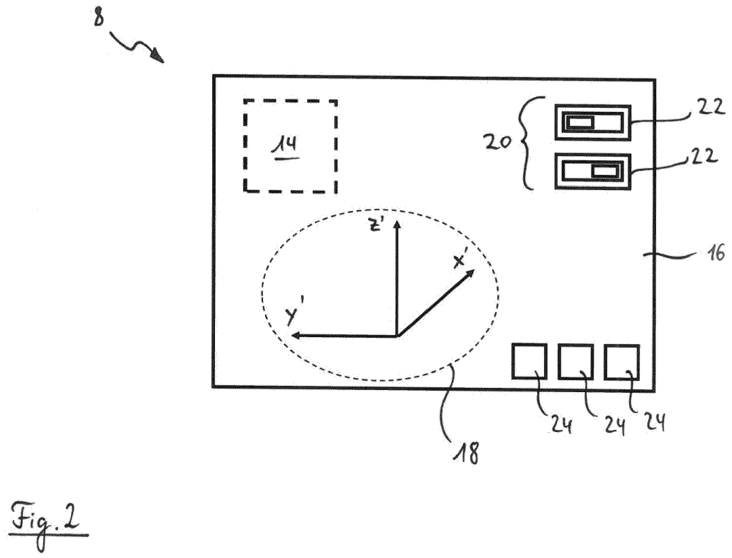

Fig. 2 zeigt eine Ausführungsform einer Steuereinheit 8, wie sie beispielsweise auch in dem Nutzfahrzeug 2 eingebaut sein kann. Ein Gyrosensor 14 ist als integraler Bestandteil der Steuereinheit 8 in einem Gehäuse 16 der Steuereinheit 8 angeordnet. Auf dem Gehäuse 16 ist eine optisch wahrnehmbare Markierung 18 angebracht, die die drei zueinander orthogonalen ausgezeichneten Richtungsachsen x', y' und z' anzeigen. Zur Auswahl einer der Richtungsachsen x', y' und z' als Haupt-Richtungsachse weist die Steuereinheit 8 eine Schalteranordnung 20 mit zwei DIP-Schaltern 22 auf. Zur verbesserten Erfassung einer Fahrtrichtungsänderung wird eine der zumindest einen ausgezeichneten Richtungsachsen x', y', z' des Gyrosensors 14 parallel zur in Vorwärtsfahrtrichtung nach vorn zeigenden x-Achse des Fahrzeugkoordinatensystems 11 ausgerichtet. Zur Kommunikation mit den übrigen Komponenten des Abbiegeassistenzsystems sowie mit der Zentralelektrik 12 ist die Steuereinheit 8 mit diversen Kommunikationsschnittstellen 24 ausgestattet.

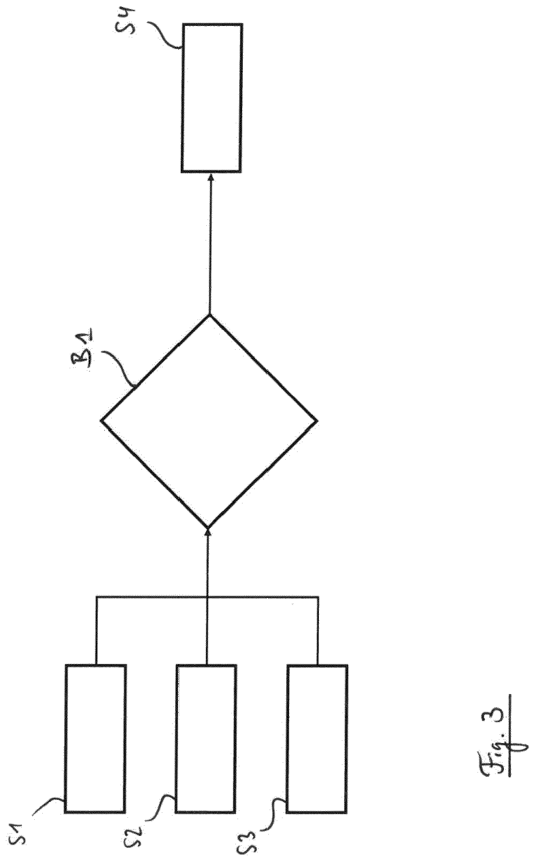

Fig. 3 zeigt eine Ausführungsform eines erfindungsgemäßen Verfahrensablaufs. Dabei umfasst das Verfahren zur Erkennung und Signalisierung der Anwesenheit einer Person an einer Fahrzeugseite 6 eines Nutzfahrzeugs 2, die bei einem Abbiegevorgang gefährdet werden würde, insbesondere durchgeführt durch ein Abbiegeassistenzsystem nach einem der Ansprüche 1 bis 5, folgende Schritte:
- Überwachung eines Gefahrenbereichs G neben der Fahrzeugseite 6 des Nutzfahrzeugs 2 mittels einer Erfassungseinrichtung 4 zur Erkennung der Anwesenheit einer Person (Schritt S1),
- Überwachung einer momentanen Fahrgeschwindigkeit des Nutzfahrzeugs 2 (Schritt S2),
- Überwachung einer Fahrtrichtungsänderung des Nutzfahrzeugs 2 mittels eines mit dem Nutzfahrzeug 2, insbesondere mit dessen Fahrerkabine 10, orts- und lagefest verbundenen Gyrosensors 14 (Schritt S3),
- Signalisierung einer Anwesenheit einer Person an der Fahrzeugseite 6 des Nutzfahrzeugs 2 (Schritt S4), wenn sich zumindest eine Person im Gefahrenbereich befindet und basierend auf der momentanen Fahrgeschwindigkeit und einer Fahrtrichtungsänderung des Nutzfahrzeugs 2 eine berechnete Kurvenfahrt des Nutzfahrzeugs mit einem Kurvenradius kleiner gleich einem Grenzkurvenradius vorliegt (Bedingung B1).

## Patentansprüche

1. Abbiegeassistenzsystem für ein Nutzfahrzeug (2) umfassend eine Erfassungseinrichtung (4) zur Erkennung der Anwesenheit einer Person an einer Fahrzeugseite (6) des Nutzfahrzeugs (2) sowie eine Steuereinheit (8) mit Mitteln zur Erkennung eines Abbiegevorgangs des Nutzfahrzeugs (2), die zumindest eine momentane Fahrgeschwindigkeit des Nutzfahrzeugs (2) verarbeiten, wobei das Abbiegeassistenzsystem derart eingerichtet ist, dass ein Warnsignal ausgegeben wird, wenn eine Person bei einem Abbiegevorgang gefährdet werden würde, **dadurch gekennzeichnet, dass** die Mittel zur Erkennung eines Abbiegevorgangs zumindest einen Gyrosensor (14) zur Erfassung einer Fahrtrichtungsänderung des Nutzfahrzeugs (2) aufweisen.

2. Abbiegeassistenzsystem nach Anspruch 1, **dadurch gekennzeichnet, dass** dem Gyrosensor (14) zumindest eine optisch wahrnehmbare Markierung (18) zugeordnet ist, die auf einer den Gyrosensor (14) aufnehmenden Platine und/oder auf einem den Gyrosensor aufnehmenden Gehäuse (16) angebracht ist und die Richtung zumindest einer ausgezeichneten Richtungsachse x', y', z' des Gyrosensors (14) anzeigt.

3. Abbiegeassistenzsystem nach Anspruch 1 oder 2, **dadurch gekennzeichnet, dass** der Gyrosensor (14) zumindest zwei ausgezeichnete Richtungsachsen x', y', z' aufweist und die Steuereinheit (8) eine Schalteranordnung (20) mit zumindest einem Schalter (22) aufweist, über die eine der ausgezeichneten Richtungsachsen x', y', z' des Gyrosensors (14) als Haupt-Richtungsachse ausgewählt werden kann.

4. Abbiegeassistenzsystem nach einem der Ansprüche 1 bis 3, **dadurch gekennzeichnet, dass** der Gyrosensor (14) und die Steuereinheit (8) in einem gemeinsamen Gehäuse (16), insbesondere auf einer gemeinsamen Platine, angeordnet sind.

5. Abbiegeassistenzsystem nach einem der Ansprüche 1 bis 4, **dadurch gekennzeichnet, dass** der Gyrosensor (14) ein Vibrationskreisel ist.

6. Gerät, das derart ausgebildet und eingerichtet ist, als Steuereinheit (8) für ein Abbiegeassistenzsystem für ein Nutzfahrzeug (2), insbesondere für ein Abbiegeassistenzsystem nach einem der Ansprüche 1 bis 5, zu funktionieren, wobei das Abbiegeassistenzsystem eine Erfassungseinrichtung (4) zur Erkennung der Anwesenheit einer Person an einer Fahrzeugseite (6) des Nutzfahrzeugs (2) aufweist und derart eingerichtet ist, dass ein Warnsignal ausgegeben wird, wenn die Person bei einem Abbiegevorgang gefährdet werden würde, wobei das Gerät Mittel zur Erkennung eines Abbiegevorgangs des Nutzfahrzeugs aufweist, die zumindest eine momentane Fahrtgeschwindigkeit des Nutzfahrzeugs verarbeiten, **dadurch gekennzeichnet, dass** das Gerät einen Gyrosensor (14) zur Erfassung einer Fahrtrichtungsänderung des Nutzfahrzeugs (2) aufweist, der mit dem übrigen Gerät in einem gemeinsamen Gehäuse (16), insbesondere auf einer Platine des Geräts, angeordnet ist.

7. Gerät nach Anspruch 6, **dadurch gekennzeichnet, dass** das Gehäuse (16) des Geräts oder die Platine des Geräts zumindest eine optisch wahrnehmbare Markierung (18) aufweist, die die Richtung zumindest einer ausgezeichneten Richtungsachse x', y', z' des Gyrosensors (14) anzeigt.

8. Gerät nach Anspruch 6 oder 7, **dadurch gekennzeichnet, dass** der Gyrosensor (14) zumindest zwei ausgezeichnete Richtungsachsen x', y', z' aufweist und das Gerät eine Schalteranordnung (20) mit zumindest einem Schalter (22) aufweist, über die eine der ausgezeichneten Richtungsachsen x', y', z' des Gyrosensors (14) als Haupt-Richtungsachse ausgewählt werden kann.

9. Nutzfahrzeug, **gekennzeichnet durch** ein Abbiegeassistenzsystem nach einem der Ansprüche 1 bis 5.

10. Verfahren zur Erkennung und Signalisierung der Anwesenheit einer Person an einer Fahrzeugseite (6) eines Nutzfahrzeugs (2), die bei einem Abbiegevorgang gefährdet werden würde, insbesondere durchgeführt durch ein Abbiegeassistenzsystem nach einem der Ansprüche 1 bis 5, wobei das Verfahren folgende Schritte umfasst:
- Überwachung eines Gefahrenbereichs (G) neben der Fahrzeugseite (6) des Nutzfahrzeugs (2) mittels einer Erfassungseinrichtung (4) zur Erkennung der Anwesenheit einer Person (Schritt S1),
- Überwachung einer momentanen Fahrgeschwindigkeit des Nutzfahrzeugs (2) (Schritt S2),
- Überwachung einer Fahrtrichtungsänderung des Nutzfahrzeugs (2) (Schritt S3),
- Signalisierung einer Anwesenheit einer Person an der Fahrzeugseite (6) des Nutzfahrzeugs (2) (Schritt S4), wenn sich zumindest eine Person im Gefahrenbereich (G) befindet und basierend auf der momentanen Fahrgeschwindigkeit und einer Fahrtrichtungsänderung des Nutzfahrzeugs (2) eine berechnete Kurvenfahrt des Nutzfahrzeugs (2) mit einem Kurvenradius kleiner gleich einem Grenzkurvenradius vorliegt (Bedingung B1),
**dadurch gekennzeichnet, dass** die Fahrtrichtungsänderung des Nutzfahrzeugs (2) mittels eines mit dem Nutzfahrzeug (2), insbesondere mit dessen Fahrerkabine (10), orts- und lagefest verbundenen Gyrosensors (14) überwacht wird.
